Europäisches Patentamt

European Patent Office

Office européen des brevets

(11) **EP 1 480 375 A1**

(19)

(12) **DEMANDE DE BREVET EUROPEEN**

(43) Date de publication:
**24.11.2004 Bulletin 2004/48**

(51) Int Cl.$^7$: **H04L 9/32**

(21) Numéro de dépôt: **04291052.1**

(22) Date de dépôt: **22.04.2004**

| | |
|---|---|
| (84) Etats contractants désignés:<br>**AT BE BG CH CY CZ DE DK EE ES FI FR GB GR**<br>**HU IE IT LI LU MC NL PL PT RO SE SI SK TR**<br>Etats d'extension désignés:<br>**AL HR LT LV MK**<br><br>(30) Priorité: **20.05.2003 FR 0306035**<br><br>(71) Demandeur: **FRANCE TELECOM**<br>**75015 Paris (FR)** | (72) Inventeurs:<br>• **Arditti Modiano, David**<br>**92140 Clamart (FR)**<br>• **Frisch, Laurent**<br>**75013 Paris (FR)**<br>• **Mouton, Dimitri**<br>**75015 Paris (FR)**<br><br>(74) Mandataire: **Loisel, Bertrand**<br>**Cabinet Plasseraud**<br>**65/67 rue de la Victoire**<br>**75440 Paris Cedex 09 (FR)** |

(54) **Procédé de signature électronique de groupe avec anonymat révocable, équipements et programmes pour la mise en oeuvre du procédé**

(57)     Dans un schéma de ring-signature, on fait en sorte qu'au moins une des valeurs des paramètres de variabilité employés soit une trace d'identité du signataire anonyme ($E_s$), déterminée en fonction de données de levée d'anonymat (DLA) mémorisées et tenues secrètes par une entité de levée d'anonymat en relation avec une identification du signataire anonyme. Ceci permet ultérieurement de lever l'anonymat du signataire de façon contrôlée, soit par une autorité, soit par le signataire lui-même.

FIG. 1

EP 1 480 375 A1

**Description**

La présente invention concerne les techniques de signature électronique et plus particulièrement les techniques de signature de groupe.

L'objet fondamental permettant d'avoir confiance en la partie publique d'une clé cryptographique (clé publique) est le certificat. Le standard de certificat utilisé dans de nombreux réseaux dont l'Internet est X.509, version 3. Une spécification en est fournie par le groupe de travail PKIX de l'IETF ("Internet Engineering Task Force") dans la Request For Comments (RFC) 3280, "Internet X.509 Public Key Infrastructure; Certificate and Certificate Revocation List (CRL) Profile" publiée en avril 2002. Le certificat est un objet comprenant notamment:

- la clé publique à certifier;
- l'identité de son possesseur;
- une période de validité;
- une signature cryptographique de ces données par la clé privée d'une Autorité de Certification (AC) émettrice du certificat.

Avoir confiance en la clé publique associée à une identité revient à s'assurer de la validité du certificat. Pour PKIX, un certificat est valide à un instant T donné (en termes de confiance):

- soit s'il est explicitement déclaré comme "certificat de confiance". En pratique, les certificats des utilisateurs ne sont jamais déclarés de confiance. On déclare plutôt un nombre réduit de certificats de confiance, consistant en les certificats de certaines AC;
- soit s'il vérifie les conditions suivantes:

    - la signature cryptographique du certificat est mathématiquement valide;
    - l'instant T fait partie de la période de validité du certificat;
    - le certificat n'est pas révoqué à l'instant T;
    - la clé publique de l'AC émettrice est disponible par un certificat de l'AC, et ce certificat de l'AC est lui-même valide à l'instant T.

La fonction de signature électronique permet de garantir l'authenticité d'un document, c'est-à-dire d'authentifier de façon sûre son ou ses signataires et de garantir que le document n'a pas été modifié (intégrité). La signature électronique est souvent utilisée pour garantir la non-répudiation. La non-répudiation d'un document consiste à se prémunir contre un déni ultérieur de son auteur.

Cette signature électronique traditionnelle transpose dans le monde électronique le mécanisme de signature manuelle. Une autre forme de signature électronique, reposant sur des techniques de cryptographie multi-acteurs, offre des caractéristiques à la fois proches de la signature simple (une certaine garantie de la provenance d'un message) et radicalement différentes (anonymat du signataire parmi un groupe de personnes). La signature de groupe (ou "group-signature") permet à un individu membre d'un groupe administré par une autorité d'effectuer une signature au nom du groupe.

La signature de groupe fait intervenir au moins un signataire, un groupe d'individus auquel le signataire appartient, et une autorité. Il permet à un individu de signer au nom d'un groupe d'individus, mais de manière anonyme. Quand une entité vérifie une signature de groupe, elle est certaine que la signature a bien été effectuée par un membre du groupe, sans pouvoir déterminer lequel. Une seule entité peut déterminer l'identité du signataire: l'autorité. Dans ce cas, on dit qu'elle "ouvre" la signature. La signature de groupe est alors dite à "anonymat limité". Cette possibilité de lever l'anonymat peut s'avérer utile, notamment en cas de fraude ou pour assurer le bon fonctionnement d'un service comme par exemple un service d'enchères. En général, la signature de groupe nécessite une phase d'initialisation et met en jeu des clés cryptographiques spécifiques.

Les mécanismes de signature de groupe ne sont pas standardisés. Des exemples en sont décrits dans les articles:

- D. Chaum, et al., "Group signatures", Eurocrypt '91. 1991;
- G. Atienese, et al., "A Practical and Provably Secure Coalition-Resistant Group Signature Scheme", Crypto 2000, http://www.zurich.ibm.com/security/publications/2000/ACJT2000.pdf.

Ces techniques connues de signature de groupe permettent généralement de lever l'anonymat. Mais elles ont des inconvénients: lourdeur de mise en place, nécessité d'une autorité d'administration, clés incompatibles avec les standards du marché. La gestion des groupes complique beaucoup ces mécanismes de signature de groupe. En général, c'est l'autorité qui en est chargée. Mais cela n'ôte pas la complexité des opérations d'adhésion d'un nouveau membre à un groupe déjà existant et de retrait d'un membre d'un groupe. Comme les opérations de signature font appel à des clés non standard, un utilisateur muni d'une clé RSA et d'un certificat X.509 ne pourra utiliser cette clé pour effectuer sa signature de groupe.

La "ring-signature", ou signature en anneau, est un algorithme de signature à cryptographie multi-acteurs qui n'est pas à proprement parler une signature de groupe. Elle diffère de la signature de groupe en ce que:

- les personnes aux noms desquelles le signataire produit sa ring-signature ne font pas partie d'un groupe formalisé et n'ont donc pas donné de consentement explicite;
- il n'y a pas d'autorité;
- à moins que le signataire ne soit explicitement mentionné, l'anonymat ne peut pas être levé.

Il faut tout de même que tous les éventuels signataires aient une clé publique accessible au signataire. On n'a pas besoin de phase préalable de configuration. Comme il n'y a pas d'autorité, la ring-signature offre un anonymat complet, c'est-à-dire que personne ne peut déterminer qui est le signataire effectif, à moins d'introduire des mécanismes complémentaires.

Ce mécanisme de ring-signature a été introduit pour la première fois par R.L. Rivest, et al.: "How to Leak a Secret", Asiacrypt'01, décembre 2001, http://theory.lcs.mit.edu/~rivest/RivestShamirTauman-HowToLeakASecret. pdf). Des variantes en ont ensuite été proposées, par exemple par E. Bresson, et al., "Threshold Ring Signatures and Applications to Ad-hoc Groups" Crypto'02, août 2002.

La ring-signature fait intervenir un signataire $E_s$ parmi un ensemble E de r entités ou individus $E_i$ susceptibles de signer (i allant de 1 à r), munis de clés publiques respectives $PUB_i$ accessibles au signataire. Chacune des clés publiques $PUB_i$ est associée, dans un schéma de cryptographie asymétrique tel que par exemple le RSA, à une clé privée $PR_i$ connue du seul membre $E_i$. Le signataire $E_s$ appartient à l'ensemble E ($1 \leq s \leq r$). Un algorithme de ring-signature permet à $E_s$ de signer au nom de E mais de manière anonyme en ce sens qu'une entité vérifiant une ring-signature est certaine que la signature a bien été effectuée par un membre de E, sans pouvoir déterminer lequel.

On note M l'ensemble des messages ou documents susceptibles d'être signés. Le nombre b désignant une "largeur d'anneau" exprimée en bits, on note B l'ensemble des messages de b bits. Une "combinaison" C détermine une fonction de combinaison $C_{m,v}$ comme une fonction d'un nombre quelconque de variables d'entrée dans B, prenant ses valeurs dans B, dépendant d'au moins deux paramètres $m \in M$ et $v \in B$ et telle que, toutes les variables d'entrée sauf une quelconque étant fixées, $C_{m,v}$ soit une bijection de B dans B. Pour minimiser la complexité algorithmique, il convient que (i) pour toutes valeurs des variables d'entrée, $C_{m,v}$ soit facile à calculer, et (ii) l'inverse de chacune des bijections précitées soit aussi facile à calculer. Cette opération inverse est appelée "résolution de l'équation de l'anneau". Pour certaines variables $y_1$, $y_2$, ..., $y_r$, "l'équation de l'anneau" s'exprime de la façon suivante:

$$C_{m,v}(y_1, y_2, ..., y_r) = v \qquad (1)$$

On définit d'autre part une fonction A qui, à des clés de cryptographie asymétrique (PUB, PR), où PUB est une clé publique et PR une clé privée correspondante, associe un couple (g, h) tel que:

- g est une fonction à valeurs dans B qui peut dépendre de PUB mais pas de PR;
- h est une fonction d'une variable de B qui peut dépendre de PUB et PR;
- g et h sont inverses l'une de l'autre, c'est-à-dire:

  - g(h(y)) = y pour tout y dans B; et

  - h(g(x)) = x pour tout x acceptable en entrée de g.

La définition du triplet (b, C, A) caractérise un schéma de ring-signature. Un "système de production de ring-signature" est défini par un tel triplet (b, C, A), un ensemble d'entités E = {$E_i$ / $1 \leq \leq r$} ayant chacune un couple de clés publique et privée $PUB_i$, $PR_i$ définissant un couple de fonctions $(g_i, h_i) = A(PUB_i, PR_i)$, un indice $s \in \{1, 2, ..., r\}$ désignant une entité signataire $E_s$, et un message $m \in M$.

Ce système de production de ring-signature étant fixé, on appelle ring-signature du message m au nom de E la fourniture des clés publiques $PUB_i$ des r entités $E_i$, d'un élément v de B, et de r éléments $x_i$ ($1 \leq i \leq r$). Cette signature est valide si elle vérifie l'équation de l'anneau (1) pour les r variables d'entrée $y_i = g_i(x_i)$ de B ($1 \leq i \leq r$).

Un algorithme de production de ring-signature par S s'exécute alors comme suit:

/a/ choisir aléatoirement v dans B;

/b/ choisir des éléments $x_i$ aléatoires pour tous les i $\neq$ s;

/c/ résoudre l'équation de l'anneau en $y_s$ en fixant les variables d'entrée $y_i = g_i(x_i)$ pour les i $\neq$ s à l'aide des clés publiques $PUB_i$, c'est-à-dire déterminer $y_s$ tel que

$$C_{m,v}(g_1(x_1), ..., g_{s-1}(x_{s-1}), y_s, g_{s+1}(x_{s+1}), ..., g_r(x_r)) = v$$

/d/ calculer $x_s = h_s(y_s)$ à l'aide de la clé privée $PR_s$; et

/e/ délivrer la ring-signature: ($PUB_1$, $PUB_2$, ..., $PUB_r$ ; v; $x_1$, $x_2$, ..., $x_r$).

   Cette ring-signature est alors vérifiable par l'algorithme de vérification suivant:

/f/ calculer les $y_i = g_i(x_i)$ pour 1 $\leq$ i $\leq$ r à l'aide des clés publiques $PUB_i$;

/g/ évaluer la fonction de combinaison $C_{m,v}(y_1, y_2, ..., y_r)$; et

/h/ accepter la ring-signature si et seulement si le résultat est v.

La ring-signature permet de remédier aux inconvénients des méthodes classiques de signature de groupe. Mais, dans ses versions connues, elle impose de renoncer à pouvoir lever l'anonymat. Or la capacité de lever l'anonymat est une propriété essentielle pour un certain nombre d'applications comme par exemple des boîtes à idées électroniques, des applications de loterie électronique, des services d'enchères électroniques, etc.

La présente invention a pour but d'adapter la technique de ring-signature pour permettre la levée de l'anonymat.

L'invention propose ainsi un procédé de signature électronique d'un message par un signataire anonyme appartenant d'un groupe de r signataires possibles ayant chacun une clé publique et une clé privée associées dans un schéma de cryptographie asymétrique, r étant un entier plus grand que 1. Ce procédé comprend les étapes suivantes exécutées dans un dispositif de signature électronique du signataire anonyme:

- obtenir au moins r valeurs de paramètres de variabilité incluant les valeurs de r-1 paramètres de variabilité respectivement associés aux autres signataires possibles du groupe et au moins une valeur de paramètre supplémentaire;

- chiffrer les valeurs des r-1 paramètres de variabilité associés aux autres signataires possibles du groupe, à l'aide des clés publiques respectives desdits autres signataires possibles, ce qui produit r-1 valeurs chiffrées respectivement associées aux autres signataires possibles du groupe;

- déterminer une valeur complémentaire qui vérifie une équation d'anneau dont les variables sont le message à signer, chacune des r-1 valeurs chiffrées associées aux autres signataires possibles du groupe, chaque valeur de paramètre supplémentaire et ladite valeur complémentaire;

- déchiffrer la valeur complémentaire déterminée, à l'aide de la clé privée du signataire anonyme, ce qui produit la valeur d'un paramètre de variabilité associé au signataire anonyme; et

- délivrer une signature électronique du message comprenant les clés publiques respectives des r signataires possibles du groupe, les valeurs des paramètres de variabilité respectivement associés aux r signataires possibles du groupe et chaque valeur de paramètre supplémentaire.

Selon l'invention, au moins une des r valeurs de paramètres de variabilité est une trace d'identité du signataire anonyme, déterminée en fonction de données de levée d'anonymat mémorisées et tenues secrètes par au moins une entité de levée d'anonymat en relation avec une identification du signataire anonyme.

Le procédé permet la levée de l'anonymat sur des signatures ayant les mêmes propriétés que la ring-signature. Cela permet avantageusement de disposer d'un algorithme de signature ayant la plupart des propriétés des signatures de groupe, mais avec des clés standard, sans la gestion lourde des groupes, et sans requérir obligatoirement un administrateur.

Un autre aspect de la présente invention se rapporte à un dispositif informatique de signature électronique de messages par un signataire anonyme, comprenant des moyens adaptés à la mise en oeuvre des étapes du procédé défini ci-dessus, qui incombent à un tel dispositif de signature électronique.

Un autre aspect de la présente invention se rapporte à un serveur de confiance pour intervenir dans la production de données de levée d'anonymat relativement à au moins un signataire anonyme, comprenant des moyens de mise en oeuvre des étapes de certains modes d'exécution du procédé défini ci-dessus, qui incombent à un tel serveur.

L'invention propose encore des programmes d'ordinateur à installer dans un dispositif informatique de signature électronique ou dans un serveur de confiance. Ces programmes comprennent des instructions pour mettre en oeuvre les étapes d'un procédé tel que défini ci-dessus, qui incombent à un tel dispositif ou serveur, lors de leur exécution par des moyens de traitement dudit dispositif ou serveur.

Un autre aspect encore de la présente invention se rapporte à un procédé de levée de l'anonymat d'au moins un signataire anonyme d'un message signé électroniquement conformément à un procédé tel que défini ci-dessus. Ce procédé de levée d'anonymat comprend les étapes suivantes:

- vérifier la signature électronique du message, en extrayant de la signature électronique du message les clés publiques respectives des r signataires possibles du groupe, les valeurs des paramètres de variabilité respectivement associés aux r signataires possibles du groupe et chaque valeur de paramètre supplémentaire, en obtenant r valeurs chiffrées par chiffrage des valeurs des paramètres de variabilité associés aux r signataires possibles du groupe à l'aide de leurs clés publiques respectives, et en s'assurant que le message, les r valeurs chiffrées et chaque valeur supplémentaire vérifient ensemble l'équation d'anneau;
- récupérer les données de levée d'anonymat mémorisées par l'entité de levée d'anonymat en relation avec l'identification du signataire anonyme;
- recalculer la trace d'identité du signataire anonyme en fonction des données de levée d'anonymat récupérées; et
- vérifier que la trace d'identité recalculée correspond à la trace d'identité incluse dans les r valeurs de paramètres de variabilité faisant partie de la signature électronique du message.

L'invention propose aussi un dispositif informatique pour lever l'anonymat d'au moins un signataire anonyme d'un message signé électroniquement, comprenant des moyens adaptés à la mise en oeuvre des étapes du procédé de levée d'anonymat ci-dessus, ainsi qu'un programme d'ordinateur à installer dans un tel dispositif informatique pour lever l'anonymat d'au moins un signataire anonyme d'un message signé électroniquement, comprenant des instructions pour mettre en oeuvre les étapes du procédé de levée d'anonymat ci-dessus lors d'une exécution du programme par des moyens de traitement dudit dispositif.

D'autres particularités et avantages de la présente invention apparaîtront dans la description ci-après d'exemples de réalisation non limitatifs, en référence aux dessins annexés, dans lesquels:

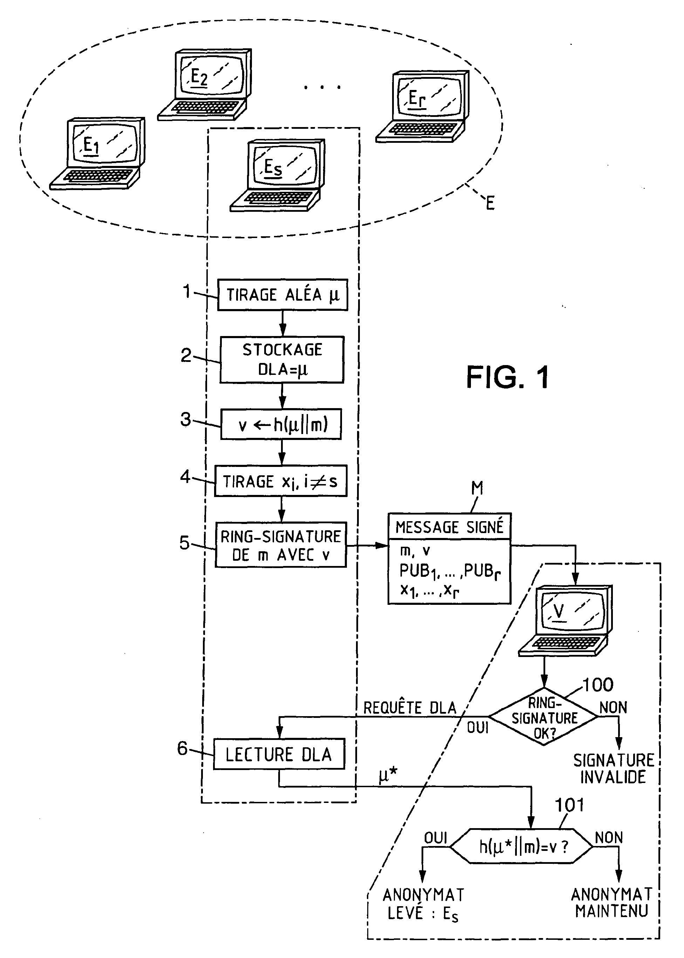

- les figures 1 à 8 sont des organigrammes illustrant différents modes de réalisation de procédés selon l'invention.

L'invention est illustrée ici, à titre non limitatif, dans le cadre d'une technique de ring-signature telle que décrite dans la publication précitée de R. Rivest, et al.

Chaque entité $E_i$ ($1 \leq i \leq r$) de l'ensemble E dispose d'une clé publique $PUB_i$ de type RSA, de module $n_i$ et d'exposant $e_i$, qui définit une permutation $f_i$ sur {0, 1, 2, ..., $n_i$-1}: $f_i(x) = x^{ei}$ *modulo* $n_i$ (cette permutation est la fonction dite de chiffrement RSA). Le domaine des clés est élargi à un domaine commun [0,$2^b$-1], ce qui définit l'entier b choisi tel que b $\geq \log_2(n_i)$ pour tout i et l'ensemble B = {0,1,2, ..., $2^b$-1}. Typiquement, b = 1024 ou 2048 selon les clés RSA des utilisateurs. Cet élargissement permet d'avoir des tailles de clés différentes selon les membres du groupe. Les fonctions $g_i$ sont définies de B dans B. En notant $q_i(x)$ et $r_i(x)$ le quotient et le reste par la division euclidienne de x par $n_i$ ($x = q_i(x).n_i + r_i(x)$ avec $0 \leq r_i(x) < n_i$), on a:

$$\text{si } (q_i(x)+1).n_i < 2^b \text{, alors } g_i(x) = q_i(x).n_i + f_i(r_i(x)); \text{ et}$$

$$\text{si } (q_i(x)+1).n_i \geq 2^b \text{, alors } g_i(x) = x.$$

Cette fonction $g_i$ dépendant de la clé publique $PUB_i$ est inversible et son inverse $h_i$ dépend de la clé privée $PR_i$ associée à $PUB_i$:

$$\text{si } (q_i(y)+1).n_i < 2^b \text{, alors } h_i(y) = q_i(y).n_i + f_i^{-1}(r_i(y)); \text{ et}$$

$$\text{si } (q_i(y)+1).n_j \geq 2^b \text{, alors } h_i(y) = y,$$

$f_i^{-1}$ étant la fonction de déchiffrement RSA, inverse de $f_i$, évaluée à l'aide de la clé privée $PR_i$.

La combinaison C est définie à l'aide d'une part d'une fonction de chiffrement symétrique $CS_k$, construite par exemple à partir d'un algorithme classique tel que DES ("Digital Encryption System"), AES ("Advanced Encryption System"), etc., et définissant une permutation sur B à partir d'une clé k, et d'autre part une fonction de hachage H, construite par exemple à partir de la fonction classique SHA-1 et apte à produire toutes les clés k valides. La clé k est générée en hachant le message M à signer: k = H(m). La fonction de combinaison $C_{m,v}$ est alors donnée par:

$$C_{m,v}(y_1, y_2, ..., y_r) = CS_k(y_r \oplus CS_k(y_{r-1} \oplus CS_k(y_{r-2} \oplus ... \oplus CS_k(y_1 \oplus v)...)))$$

où $\oplus$ désigne l'opération OU EXCLUSIF.

Cette fonction de combinaison est inversible pour toute position s, la résolution de l'équation d'anneau (1) consistant simplement à calculer:

- $u = CS_k(Y_{s-1} \oplus CS_k(Y_{s-2} \oplus ... \oplus CS_k(y_1 \oplus v)...))$;

- $u' = DS_k(Y_{s+1} \oplus DS_k(Y_{s+2} \oplus ... \oplus DS_k(Y_r \oplus DS_k(v))...))$ à l'aide de la fonction de déchiffrement symétrique associée à $CS_k$; puis

- $Y_s = u \oplus u'$.

L'invention modifie ce mécanisme de ring-signature connu en remplaçant l'une au moins des valeurs de paramètres de variabilité tirées aléatoirement, c'est-à-dire v et/ou $x_i$ pour $i \neq s$, par une trace d'identité du signataire $E_s$. Des données de levée d'anonymat (DLA) sont produites pour être mémorisées et tenues secrètes par au moins une entité de levée d'anonymat (ELA) en relation avec une identification $ID_s$ du signataire $E_s$. La trace d'identité, déterminée en fonction de ces DLA, permet ultérieurement, si le besoin s'en fait sentir, de révoquer l'anonymat procurée au signataire par le mécanisme de ring-signature.

L'ELA peut être constituée par le signataire lui-même ou par un serveur de confiance supervisé par un tiers indépendant. Elle peut aussi inclure à la fois le signataire et un tel serveur de confiance.

En référence aux figures, on voit les dispositifs informatiques détenus par les signataires possibles $E_i$ du groupe E, qui consistent par exemple en des ordinateurs ou terminaux capables de communiquer entre eux par l'intermédiaire d'un ou plusieurs réseaux de télécommunication non représentés (par exemple un réseau de type IP tel que l'Internet ou un Intranet). Ces dispositifs sont équipés de programmes adaptés à la mise en oeuvre des étapes décrites ci-après. On suppose que chaque membre du groupe E connaît les clés publiques $PUB_i$ de tous les autres. L'identification de chaque membre $E_i$ est effectuée au moyen d'une identité $ID_i$, qui peut consister en l'indice i, la clé publique $PUB_i$, un certificat de type X.509 ou autre, etc)

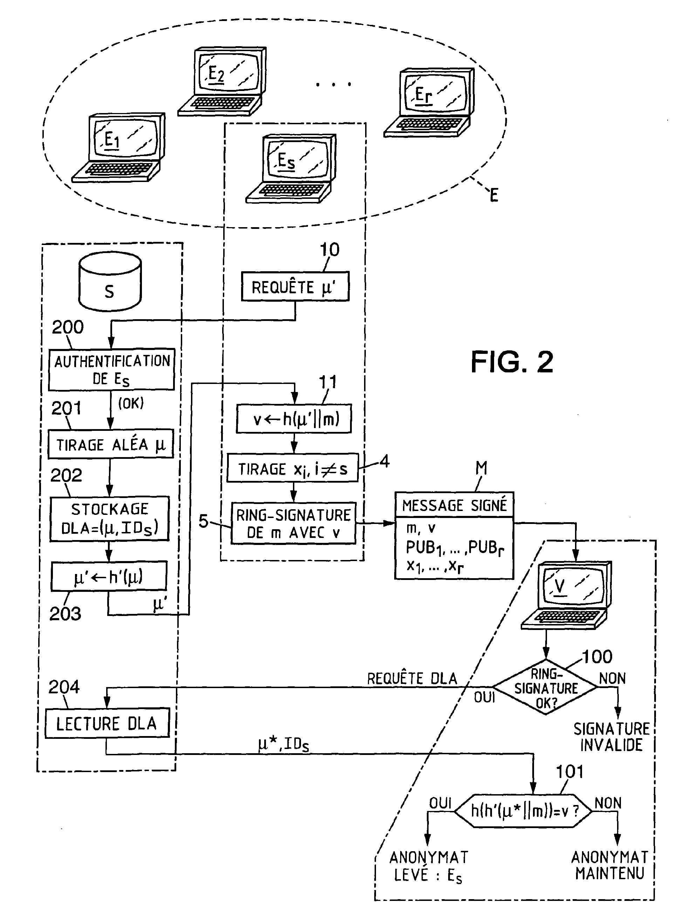

Les figures 2 à 4, 6 et 8 montrent aussi un serveur de confiance S utilisable dans certains modes de réalisation du procédé. Ce serveur est raccordé au réseau de télécommunication et est également équipé de programmes adaptés à la mise en oeuvre des étapes décrites ci-après. Il peut par exemple être réalisé par un serveur web sécurisé de type SSLv3 (voir "The SSL Protocol - Version 3.0", Internet Draft, IETF, novembre 1996). Les requêtes lui sont alors envoyées selon le protocole HTTPS avec authentification du client.

Les signatures qui interviennent (jeton, preuve du signataire) peuvent toutes être stockées dans des structures connues de type PKCS#7-signedData ou XML-DSig. Les vérifications de signature impliquent le cas échéant la vérification des chaînes de confiance des certificats.

Dans les modes de réalisation de l'invention illustrés par les figures 1 à 6, la valeur de paramètre de variabilité prise égale à la trace d'identité est la valeur du paramètre supplémentaire v servant à fermer l'anneau de signature.

Dans la réalisation de la figure 1, l'ELA est constituée par le signataire $E_s$. Le dispositif informatique de celui-ci tire un aléa $\mu$ (étape 1), qu'il mémorise en tant que DLA à l'étape 2, en le gardant secret. A l'étape 3, la trace d'identité v est calculée par hachage cryptographique de la concaténation de l'aléa $\mu$ et du message m à signer:

$$v = h(\mu \parallel m)$$

Dans la présente description, la notation $w \parallel z$ désigne la concaténation de deux messages quelconques w et z, h désigne une fonction de hachage cryptographique prenant ses valeurs dans B, et h', h'' désignent des fonctions de hachage pouvant être les mêmes ou autres que h. Ces fonctions de hachage h, h', h'' peuvent être choisies parmi celles classiquement employées dans les applications cryptographiques (SHA-1, MD-5, etc.).

Après avoir obtenu la trace d'identité v, le dispositif du signataire tire au hasard les valeurs $x_i$ dans B pour $1 \leq i < s$ et $s < i \leq r$ à l'étape 4 identique à l'étape /b/ précitée, puis exécute la ring-signature à l'étape 5 identique aux étapes /c/-/e/ précitées, avec les valeurs $x_i$ ($i \neq s$) pour les paramètres associés aux autres membres du groupe E et la valeur v pour le paramètre de variabilité supplémentaire.

La ring-signature ($PUB_1$, $PUB_2$, ..., $PUB_r$ ; v ; $x_1$, $x_2$, ..., $x_r$) peut être adjointe au message m pour former le message signé M communiqué par le signataire $E_s$. La ring-signature est vérifiable par quiconque suivant l'algorithme de vérification /f/-/h/ précédemment décrit.

La levée de l'anonymat peut être sollicitée par un vérificateur V muni d'un dispositif informatique apte à communiquer avec ceux des membres du groupe E par l'intermédiaire du réseau de télécommunication et programmé de façon à pouvoir procéder aux opérations ci-après.

Dans une première étape 100, le vérificateur V s'assure de la validité de la ring-signature. Si l'équation d'anneau (1) n'est pas vérifiée pour le message signé M, la signature est déclarée invalide. Si elle est valide, le vérificateur adresse au moins une requête de DLA à une ELA, par exemple par e-mail.

Dans le cas de la figure 1 (ELA = $E_s$), cette requête de DLA est envoyée aux membres du groupe E, seul $E_s$ étant en mesure d'y répondre convenablement. Si V se doute de l'identité du signataire, il peut n'envoyer la requête qu'à celui-ci. Sinon, il s'adresse à tous les membres du groupe, soit successivement jusqu'à obtenir une réponse satisfaisante, soit simultanément.

La requête de DLA peut inclure le message m ou une partie de celui-ci afin de permettre au destinataire de savoir pour quel message une levée d'anonymat est demandée. Elle peut notamment inclure un hash h"(m) du message m, que le signataire $E_s$ a également conservé en mémoire à l'étape 2 en relation avec les DLA. Dans le traitement de la requête, $E_s$ pourra ainsi accéder aux DLA demandées.

Le signataire $E_s$ détermine s'il accepte de lever son anonymat envers V, ce qui peut requérir une authentification préalable de V par $E_s$. Puis, s'il accepte, les DLA mémorisées sont lues à l'étape 6 et adressées à V dans un message qui peut éventuellement être signé avec la clé privée de $E_s$ pour garantir à V son origine. Recevant une valeur $\mu^*$ (=DLA) dans un tel message provenant d'un membre identifié $E_i$, V vérifie à l'étape 101 si c'est une réponse satisfaisante, c'est-à-dire si $h(\mu^* \| m)$ correspond à la valeur v incluse dans la ring-signature. Dans l'affirmative, l'anonymat de $E_s$ est levé par V. Sinon, l'anonymat est maintenu et un autre membre du groupe est éventuellement interrogé à son tour.

Le signataire $E_s$ peut aussi lever spontanément son anonymat, en communiquant $\mu$ à V (avec m) ou en le publiant sur un site web.

La variante illustrée par la figure 2 permet la levée de l'anonymat grâce à un tiers de levée d'anonymat supervisant un serveur de confiance S. Le signataire $E_s$ génère une requête d'un aléa $\mu'$ (étape 10), qu'il adresse au serveur S. Cette requête peut contenir un hash h"(m) du message m à des fins de référence. Le serveur S authentifie $E_s$ (étape 200), par exemple dans le cadre de l'établissement d'une session SSLv3 ou d'après le contenu du message transportant la requête. Si $E_s$ est bien authentifié, le traitement de la requête par S comprend le tirage d'un premier aléa $\mu$ (étape 201) qui est mémorisé et tenu secret en relation avec l'identité $ID_s$ du signataire (étape 202) et avec h"(m). La valeur $\mu'$ est alors calculée par hachage de $\mu$ à l'étape 203 ($\mu' = h'(\mu)$) puis retournée à $E_s$.

La trace d'identité v est obtenue à l'étape 11 par le signataire $E_s$ par hachage cryptographique de la concaténation de $\mu'$ et du message à signer m (ou d'une partie seulement de celui-ci): $v = h(\mu' \| m)$. Les étapes 4 et 5 précitées sont ensuite exécutées pour produire la ring-signature.

Après vérification 100 de cette ring-signature, V envoie sa requête de DLA au serveur de confiance S. Cette requête peut être accompagnée par le hash h"(m) à des fins d'identification du message. Le serveur S peut alors lire les DLA requises (étape 204) et les retourner à V. La vérification 101 permettant à V de lever l'anonymat consiste alors à tester si $h(h'(\mu^* \| m)) = v$, où $\mu^*$ est la valeur d'aléa reçue de S. Si le test est positif, V identifie $E_s$ d'après l'identité obtenue dans les DLA.

On note que, dans cette réalisation, le serveur S n'a pas de connaissance du message m avant d'enregistrer les DLA et qu'il ne peut donc pas a priori censurer $E_s$ (un hash cryptographique tel que h"(m) ne donne pas accès au contenu de m).

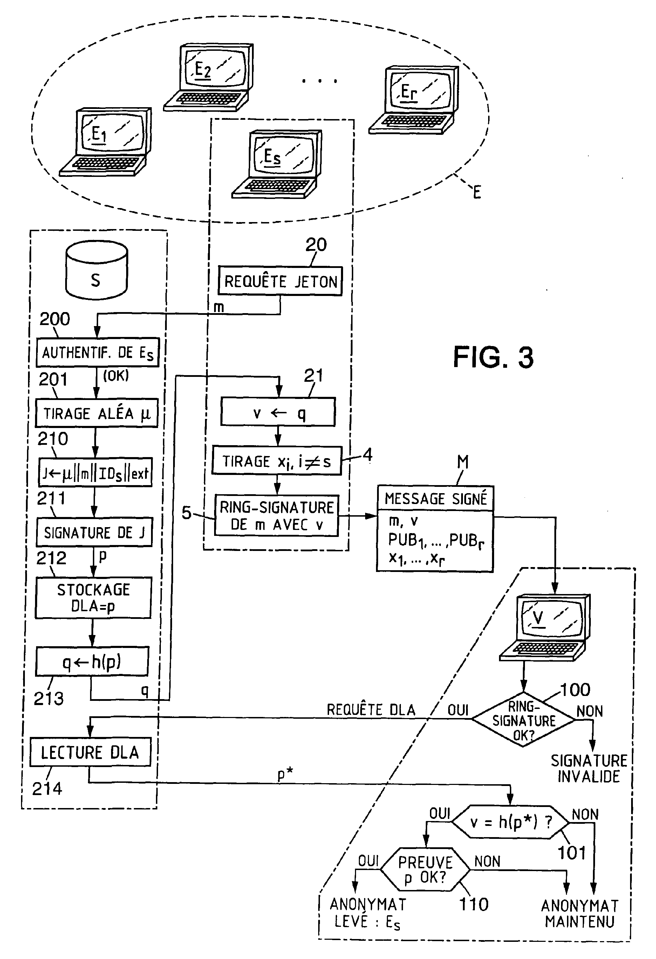

Les figures 3 à 6 illustrent des modes de réalisation de l'invention permettant, une fois l'anonymat levé, de disposer d'une preuve (levées authentifiées de l'anonymat). Dans ces modes de réalisation, il y a une phase de collecte de preuve pour la levée d'anonymat, pendant laquelle une entité produit une preuve p pouvant notamment inclure l'identité $ID_S$ du signataire et le message m. Cette preuve est conservée en tant que DLA par une ou plusieurs ELA (tiers de confiance et/ou $E_s$ elle-même). Si $E_s$ n'est pas une ELA, une ELA transmet à $E_s$ un hash $q = h(p)$ qui servira de trace d'identité. Après vérification des DLA, V peut appliquer un algorithme de vérification de la preuve de levée d'anonymat qui retourne $ID_S$ si la preuve est valide et qui refuse la levée d'anonymat si la preuve est invalide.

La preuve peut notamment être générée par signature électronique d'un jeton J composé en concaténant un aléa $\mu$, le message m (ou une partie de celui-ci, notamment un hash) et d'éventuelles extensions. La signature du jeton J peut être effectuée par $E_s$ ou par un serveur de confiance S. Dans ce dernier cas, il est judicieux que le jeton J contienne aussi une identité $ID_S$ du signataire. Les extensions du jeton peuvent comprendre un numéro de série ou d'autres données utiles. Dans une réalisation avantageuse, ces extensions incluent un jeton d'horodatage généré au moment de la composition du jeton à signer. Ce jeton d'horodatage peut notamment être généré selon le protocole TSP ("Time Stamp Protocol", voir RFC 3161, "Internet X.509 Public Key Infrastructure Time-Stamp Protocol (TSP), août 2001, IETF); il contient alors la date et l'heure du jeton J et il signé par un tiers d'horodatage.

Dans la réalisation selon la figure 3, l'ELA consiste en un serveur de confiance S.

Le signataire $E_s$ génère une requête de jeton (étape 20), qu'il adresse au serveur S avec le message m ou une partie de celui-ci (cette partie peut notamment consister en un hash h"(m) du message m, ce qui permet que S génère la preuve p sans connaître le contenu du message m). Le serveur S authentifie $E_s$ (200) et tire un aléa $\mu$ (201) comme précédemment. Puis il compose le jeton J à l'étape 210: $J = \mu \parallel m \parallel ID_s \parallel ext$ ou $J = \mu \parallel h"(m) \parallel ID_s \parallel ext$, où ext désigne les extensions optionnelles. Le serveur S signe alors le jeton J à l'aide de sa clé privée à l'étape 211, ce qui produit la preuve p mémorisée à l'étape 212. A l'étape 213, il calcule ensuite la valeur q = h(p), retournée à $E_s$ comme réponse à sa requête.

La trace d'identité v est prise égale à cette valeur q à l'étape 21 par le signataire $E_s$. Les étapes 4 et 5 précitées sont ensuite exécutées pour produire la ring-signature.

Après vérification 100 de cette ring-signature, V envoie sa requête de DLA au serveur de confiance S. Cette requête peut être accompagnée du message m ou du hash h"(m) à des fins d'identification du message. Le serveur S peut alors lire les DLA requises (étape 214) et les retourner à V. La vérification 101 permettant à V de lever l'anonymat consiste alors à tester si h(p*) = v, où p* est la preuve reçue de S. Si le test est positif, V procède à des vérifications 110 d'après la preuve p. La levée de l'anonymat de $E_s$ n'est effective que si ces vérifications sont toutes positives. A cette étape 110, V vérifie:

- la concordance entre le m trouvé dans p (ou son hash h"(m)) et le message de la ring-signature M;
- la validité de $ID_s$ et de sa concordance avec $PUB_s$;
- la validité des extensions éventuelles; et
- la validité de la signature du jeton J par S, à l'aide de la clé publique de S.

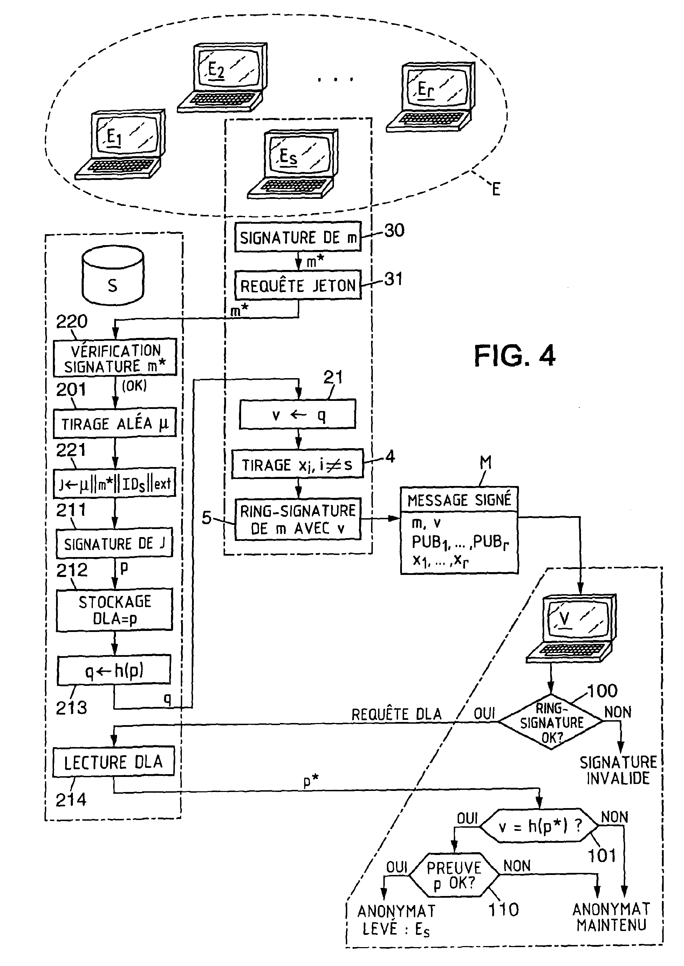

La réalisation illustrée par la figure 4 est similaire à celle de la figure 3, sauf que $E_s$ signe le message m à l'aide de sa clé privée $PR_s$ (étape 30), et envoie à S le message signé m* dans la requête de jeton générée à l'étape 31. Le serveur S vérifie cette signature à l'aide de la clé publique $PUB_s$ (étape 220), tire l'aléa $\mu$ puis composer le jeton à l'étape 221 avec le message signé m*: $J = \mu \parallel m* \parallel ID_s \parallel ext$. Les autres opérations sont les mêmes que celles de la figure 3. A l'étape 110, V pourra effectuer une vérification supplémentaire sur la preuve p, quant à la validité de la signature du message m par $E_s$, à l'aide de la clé publique $PUB_s$ de $E_s$. Cette vérification supplémentaire permet de rendre non-répudiable la levée de l'anonymat de $E_s$.

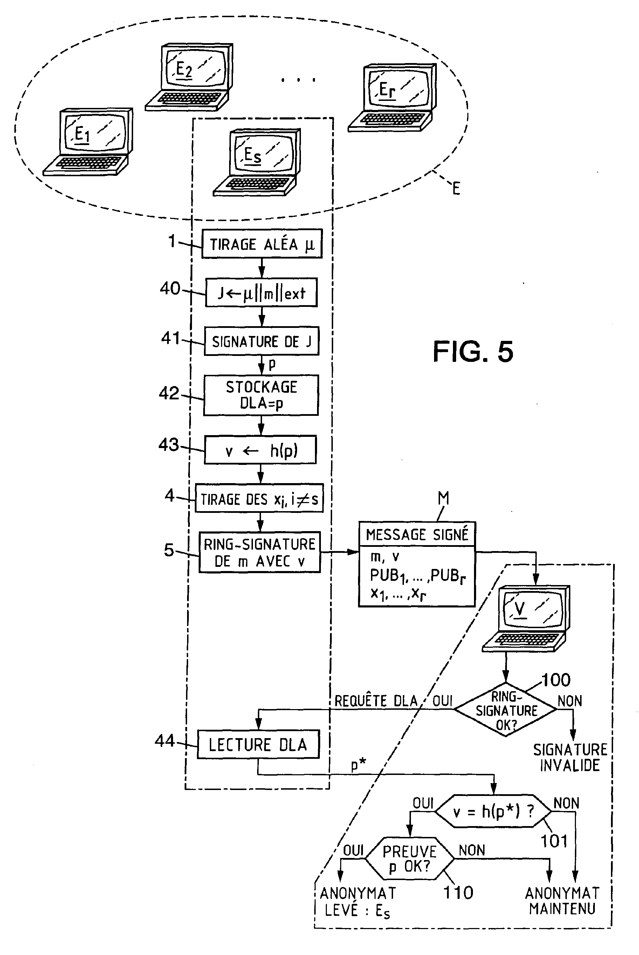

Une telle non-répudiation peut aussi être obtenue en faisant signer le jeton J par le signataire anonyme $E_s$, dans une réalisation selon la figure 5 qui ne fait pas intervenir de tiers de confiance. Un aléa $\mu$ est d'abord tiré (étape 1) dans le dispositif informatique du signataire $E_s$, qui compose le jeton J à l'étape 40: $J = \mu \parallel m \parallel ext$ ou $J = \mu \parallel h"(m) \parallel ext$. Ce jeton J est alors signé à l'aide de la clé privée $PR_s$ (étape 41), et le résultat (preuve p) est mémorisé en tant que DLA à l'étape 42 (si nécessaire en relation avec un hash h"(m) du message). A l'étape 43, $E_s$ détermine la trace d'identité v = h(p), qu'il utilise pour établir la ring-signature comme précédemment (étapes 4 et 5). Les DLA lues à l'étape 44 en réponse à la requête du vérificateur V comprennent la preuve p vérifiée comme précédemment à l'étape 110 (sauf en ce que la signature de p est vérifiée à l'aide de la clé publique $PUB_s$).

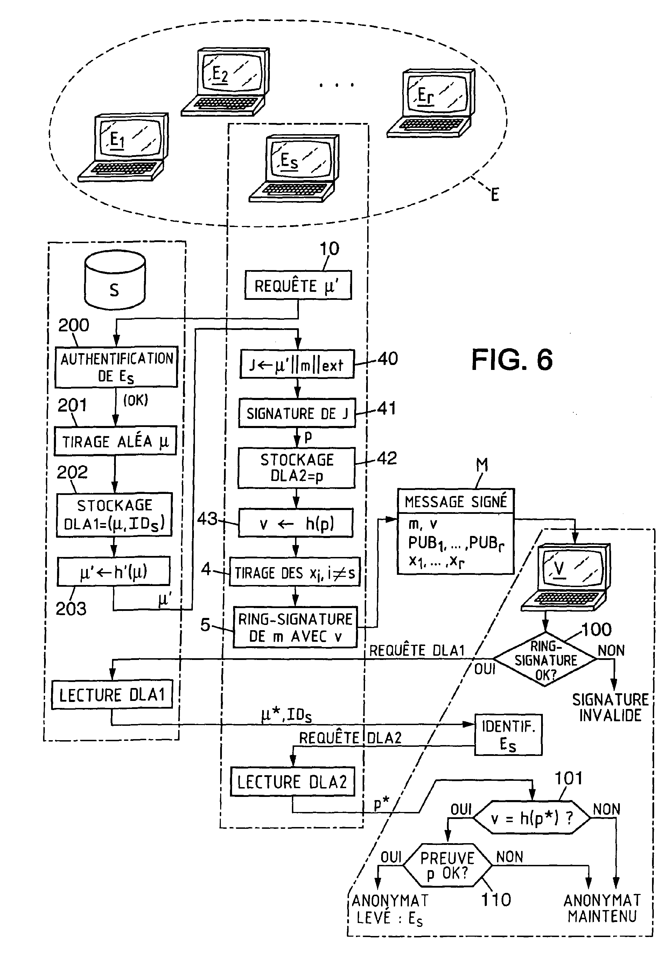

Dans la variante de la figure 6, l'ELA est constituée conjointement par le serveur de confiance S et par le signataire anonyme $E_s$, et les DLA sont subdivisées en une première partie $DLA1 = (\mu, ID_s)$ conservée par S et une seconde partie $DLA2 = p$ conservée par $E_s$. Celui-ci commence par demander un aléa $\mu'$ à S comme dans le cas de la figure 2 (étapes 10 et 200-203), cet aléa $\mu'$ étant produit par hachage d'un premier aléa $\mu$ conservé et tenu secret avec $ID_s$ (et éventuellement h"(m)) par S en tant que DLA1. Le signataire $E_s$ compose le jeton J à l'étape 40 avec la valeur $\mu'$ retournée par S ($J = \mu' \parallel m \parallel ext$), puis il le signe à l'étape 41 pour obtenir la preuve p stockée à l'étape 42 en tant que DLA2. La suite des opérations est semblable à celle de la figure 5, sauf que lors de la levée de l'anonymat, V s'adresse d'abord à S pour obtenir $DLA1 = (\mu, ID_s)$, ce qui lui permet d'identifier $E_s$, puis à Es pour obtenir la preuve p. La vérification 110 peut aussi porter sur le fait que la valeur $\mu'$ trouvée dans le jeton signé résulte bien du hachage de l'aléa $\mu$ retourné par S dans les DLA1.

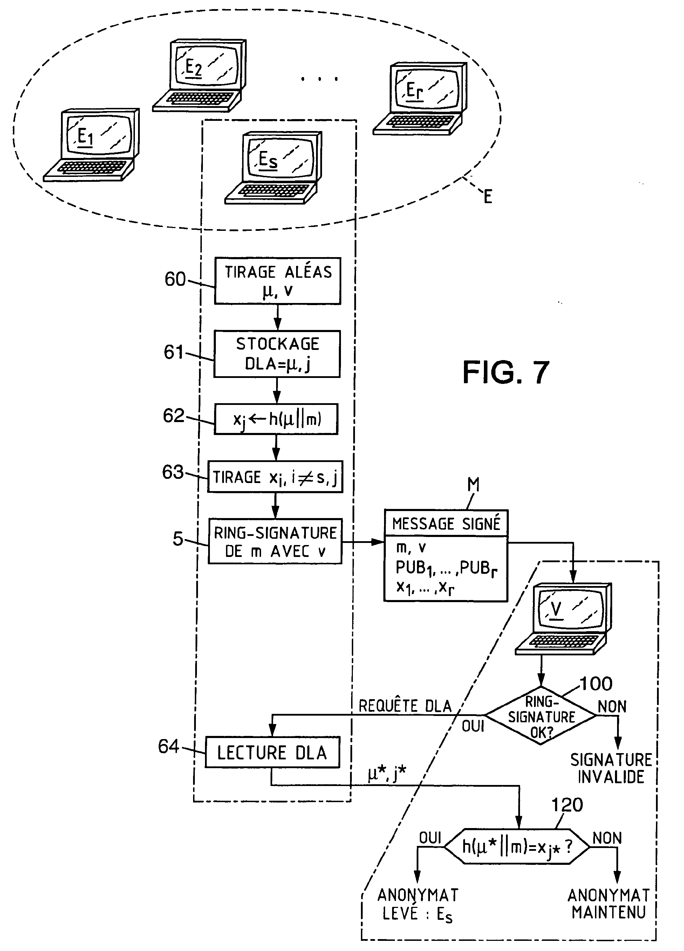

Dans le mode de réalisation de l'invention illustré par la figure 7, la valeur de paramètre de variabilité prise égale à la trace d'identité n'est pas v mais la valeur de l'un des paramètres $x_j$ associés aux autres membres $E_i$ du groupe E ($j \neq s$). L'indice j est alors choisi arbitrairement par le signataire $E_s$ et adjoint aux DLA. La variable v redevient alors un aléa.

A l'étape 60, $E_s$ tire deux aléas $\mu$ et v. Les DLA enregistrés à l'étape 61 comprennent les valeurs de l'aléa $\mu$ et de l'indice j (et éventuellement un hash h"(m) du message m). La valeur du paramètre $x_j$ associé à $E_j$ est calculée à l'étape 62 selon: $x_j = h(\mu \parallel m)$, et à l'étape 63, $E_s$ tire des valeurs aléatoires des autres $x_i$, c'est-à-dire pour $i \neq s$ et $i \neq j$. La ring-signature est ensuite exécutée comme précédemment à l'étape 5.

Lors de la levée de l'anonymat, $E_s$ lit les DLA mémorisé à l'étape 64, et les adresse à V. A partir de ces données $\mu*$, j*, la vérification 120 permettant de lever l'anonymat consiste à tester si $h(\mu* \parallel m) = x_{j*}$.

Si plusieurs signataires se mettent d'accord pour signer un message au nom d'un groupe E auquel ils appartiennent, il est possible d'utiliser le procédé décrit ci-dessus, et toutes ses variantes, afin d'élaborer un protocole de multi-signature mettant en jeu un ou plusieurs co-signataires en plus de $E_s$.

Le protocole de multi-signature peut se dérouler comme suit:

- un des signataires $E_s$ sollicite le ou les autres pour obtenir leur accord;

- chaque co-signataire $E_t$ renvoie ou fait envoyer à $E_s$ sa propre trace d'identité déterminée par l'une des variantes ci-dessus

- $E_s$ détermine sa propre trace d'identité;

- $E_s$ utilise la trace d'identité de chaque co-signataire $E_t$ à la place de la valeur du paramètre $x_j$ qui lui est respectivement associé (comme dans le cas de la figure 7), et sa propre trace d'identité comme variable v pour exécuter la ring-signature.

La levée d'anonymat peut alors être partielle: certains co-signataires peuvent choisir de se révéler, d'autres non nécessairement. Si tous sont passés par un tiers, celui-ci peut lever l'anonymat de tous simultanément.

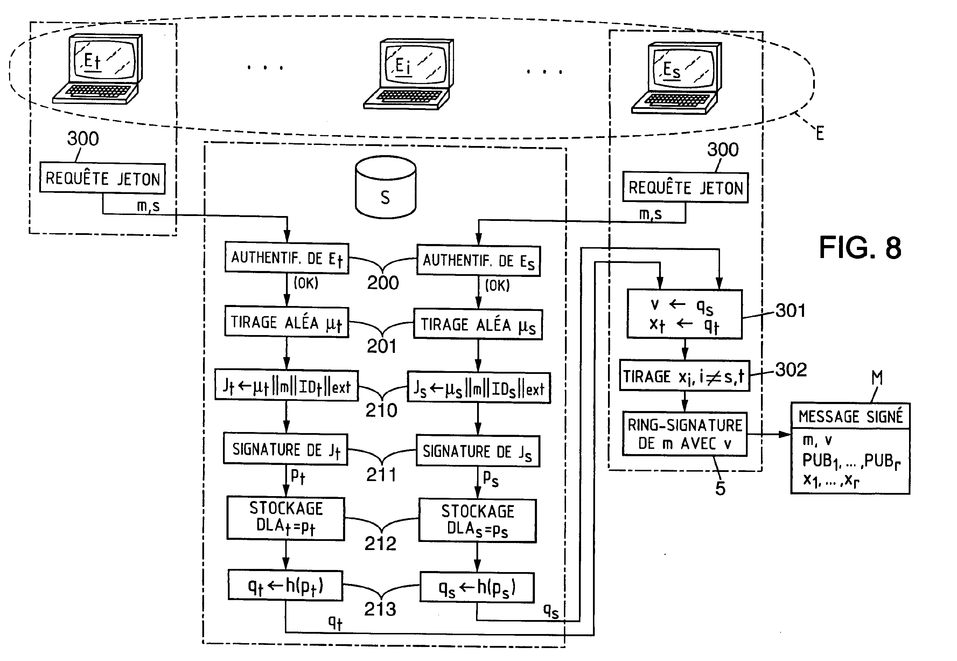

La figure 8 illustre une réalisation de la multi-signature, où il y a un co-signataire $E_t$ en plus du signataire principal $E_s$ qui exécute la ring-signature.

Les signataires $E_s$, $E_t$ se concertent pour convenir de signer en commun le message m, avec $E_s$ comme signataire principal, puis ils émettent chacun une requête de jeton vers le serveur de confiance S (étapes 300). Cette requête contient le message m à signer (ou h"(m) ou encore le message m signé avec la clé privée de l'expéditeur), ainsi que la désignation s du signataire principal. Avant de retourner ces requêtes, S peut vérifier leur compatibilité, c'est-à-dire que les messages m transmis avec les requêtes respectives des différents signataires sont bien les mêmes et qu'ils désignent tous le même signataire principal .Pour chaque signataire, S exécute alors séparément les étapes 200, 201, et 210-213 semblables à celles de la figure 3 pour produire deux preuves distinctes $p_s$, $p_t$ dont des versions hachées $q_s = h(p_s)$ et $q_t = h(p_t)$ sont retournées à $E_s$ en tant que traces d'identité de $E_s$ et $E_t$, respectivement. Le signataire principal $E_s$ affecte alors les traces d'identité $q_s$ et $q_t$ aux variables v et $x_t$ (étape 301), puis il tire au hasard les valeurs des autres paramètres $x_i$ ($i \neq s$ et $i \neq t$) à l'étape 302 avant d'exécuter la ring-signature à l'étape 5.

Les preuves $p_s$ et $p_t$ sont alors vérifiables séparément ou simultanément par V auprès du serveur S

Deux cas de multi-signature notamment sont intéressants:

- les signataires utilisent des traces d'identité non authentifiées; on a alors un concept de "boîte à idées en commun", les signataires voulant revendiquer leur collaboration;
- les signataires utilisent des traces d'identité authentifiées (par exemple selon la figure 8): on garde alors une trace cryptographique d'une sorte de délibération de groupe. La ring-signature se comporte comme un engagement des signataires qui préserve leur anonymat. L'anonymat peut cependant être levé en cas de besoin.

## Revendications

1. Procédé de signature électronique d'un message (m) par un signataire anonyme ($E_s$) appartenant d'un groupe de r signataires possibles (E) ayant chacun une clé publique ($PUB_i$) et une clé privée ($PR_i$) associées dans un schéma de cryptographie asymétrique, r étant un entier plus grand que 1, le procédé comprenant les étapes suivantes exécutées dans un dispositif de signature électronique du signataire anonyme:

   - obtenir au moins r valeurs de paramètres de variabilité incluant les valeurs de r-1 paramètres de variabilité ($x_i$, $i \neq s$) respectivement associés aux autres signataires possibles du groupe et au moins une valeur de paramètre supplémentaire (v);
   - chiffrer les valeurs des r-1 paramètres de variabilité associés aux autres signataires possibles du groupe, à l'aide des clés publiques respectives desdits autres signataires possibles, ce qui produit r-1 valeurs chiffrées ($y_i$, $i \neq s$) respectivement associées aux autres signataires possibles du groupe;
   - déterminer une valeur complémentaire ($y_s$) qui vérifie une équation d'anneau dont les variables sont le message à signer, chacune des r-1 valeurs chiffrées associées aux autres signataires possibles du groupe, chaque valeur de paramètre supplémentaire et ladite valeur complémentaire;
   - déchiffrer la valeur complémentaire déterminée, à l'aide de la clé privée du signataire anonyme, ce qui produit la valeur d'un paramètre de variabilité ($x_s$) associé au signataire anonyme; et
   - délivrer une signature électronique du message comprenant les clés publiques respectives des r signataires possibles du groupe, les valeurs des paramètres de variabilité ($x_i$) respectivement associés aux r signataires

EP 1 480 375 A1

possibles du groupe et chaque valeur de paramètre supplémentaire,

**caractérisé en ce qu'**au moins une des r valeurs de paramètres de variabilité est une trace d'identité du signataire anonyme, déterminée en fonction de données de levée d'anonymat (DLA) mémorisées et tenues secrètes par au moins une entité de levée d'anonymat ($E_s$; S) en relation avec une identification du signataire anonyme.

2. Procédé selon la revendication 1, dans lequel le signataire anonyme ($E_s$) constitue l'entité de levée d'anonymat.

3. Procédé selon la revendication 2, comprenant en outre les étapes suivantes exécutées dans le dispositif de signature électronique du signataire anonyme ($E_s$):

   - tirer une valeur aléatoire ($\mu$); et
   - mémoriser et tenir secrète au moins ladite valeur aléatoire en tant que données de levée d'anonymat (DLA).

4. Procédé selon la revendication 1, comprenant en outre les étapes suivantes:

   - authentifier le signataire anonyme ($E_s$) auprès de l'entité de levée d'anonymat (S);
   - tirer une valeur aléatoire ($\mu$) au niveau de l'entité de levée d'anonymat;
   - mémoriser et tenir secrètes au moins ladite valeur aléatoire et une identification ($ID_s$) du signataire anonyme en tant que données de levée d'anonymat (DLA) au niveau de l'entité de levée d'anonymat;
   - transmettre de l'entité de levée d'anonymat au dispositif de signature électronique du signataire anonyme une valeur intermédiaire ($\mu'$) obtenue par hachage cryptographique de ladite valeur aléatoire; et
   - générer la trace d'identité (v) du signataire anonyme au niveau du dispositif du signataire anonyme en fonction de la valeur intermédiaire reçue de l'entité de levée d'anonymat.

5. Procédé selon la revendication 4, dans lequel la trace d'identité du signataire anonyme ($E_s$) est générée par hachage d'une concaténation d'éléments comprenant au moins la valeur intermédiaire ($\mu'$) reçue de l'entité de levée d'anonymat (S) et une partie au moins du message à signer (m).

6. Procédé selon la revendication 1 ou 2, comprenant en outre les étapes suivantes:

   - générer une preuve (p) signée à l'aide d'une clé privée et dépendant d'une identification ($ID_s$) du signataire anonyme et du message à signer (m);
   - mémoriser et tenir secrète au moins ladite preuve en tant que données de levée d'anonymat (DLA) au niveau de l'entité de levée d'anonymat ($E_s$; S); et
   - générer la trace d'identité (v) du signataire anonyme par hachage cryptographique de données incluant ladite preuve.

7. Procédé selon la revendication 6, comprenant en outre les étapes suivantes exécutées dans un serveur (S) supervisé par un tiers:

   - authentifier le signataire anonyme ($E_s$);
   - tirer une valeur aléatoire ($\mu$); et
   - composer un jeton à signer (J) par concaténation d'éléments comprenant au moins ladite valeur aléatoire, une partie au moins du message à signer (m), reçue du signataire anonyme, et l'identification ($ID_s$) du signataire anonyme,

   et dans lequel ladite preuve (p) est produite par signature du jeton à signer.

8. Procédé selon la revendication 6, comprenant en outre les étapes suivantes:

   - signer le message (m) à l'aide de la clé privée ($PR_s$) du signataire anonyme ($E_s$) et transmettre le message ainsi signé (m*) à un serveur (S) supervisé par un tiers;
   - authentifier le signataire anonyme au niveau du serveur et vérifier la signature du message à l'aide de la clé publique ($PUB_s$) du signataire anonyme;
   - tirer une valeur aléatoire ($\mu$) au niveau du serveur; et
   - composer un jeton à signer (J) au niveau du serveur par concaténation d'éléments comprenant au moins ladite valeur aléatoire, une partie au moins du message signé à l'aide de la clé privée du signataire anonyme et

**10**

l'identification ($ID_s$) du signataire anonyme,

et dans lequel ladite preuve (p) est produite par signature du jeton à signer.

**9.** Procédé selon la revendication 7 ou 8, dans lequel l'entité de levée d'anonymat inclut le serveur (S) supervisé par le tiers, et dans lequel la preuve (p) est signée à l'aide d'une clé privée du tiers.

**10.** Procédé selon la revendication 6, dans lequel l'entité de levée d'anonymat inclut le signataire anonyme ($E_s$), et dans lequel la preuve (p) est signée à l'aide de la clé privée ($PR_s$) du signataire anonyme.

**11.** Procédé selon la revendication 10, comprenant en outre les étapes suivantes exécutées dans le dispositif de signature électronique du signataire anonyme ($E_s$):

- tirer une valeur aléatoire ($\mu$);
- composer un jeton à signer (J) par concaténation d'éléments comprenant au moins ladite valeur aléatoire et une partie au moins du message à signer (m); et
- signer le jeton pour produire ladite preuve (p).

**12.** Procédé selon la revendication 10, dans lequel l'entité de levée d'anonymat inclut en outre un serveur (S) supervisé par un tiers.

**13.** Procédé selon la revendication 12, comprenant en outre les étapes suivantes:

- authentifier le signataire anonyme ($E_s$) auprès du serveur (S);
- tirer une valeur aléatoire ($\mu$) au niveau du serveur;
- mémoriser et tenir secrètes au moins ladite valeur aléatoire et une identification ($ID_s$) du signataire anonyme en tant que premières données de levée d'anonymat (DLA1) au niveau du serveur;
- transmettre du serveur au dispositif de signature électronique du signataire anonyme une valeur intermédiaire ($\mu'$) obtenue par hachage cryptographique de ladite valeur aléatoire;
- composer un jeton à signer (J) par concaténation d'éléments comprenant au moins ladite valeur intermédiaire et une partie au moins du message à signer (m);
- signer le jeton au niveau du dispositif du signataire anonyme pour produire ladite preuve (p); et
- mémoriser et tenir secrètes au moins ladite preuve en tant que secondes données de levée d'anonymat (DLA2) au niveau du dispositif du signataire anonyme.

**14.** Procédé selon l'une quelconque des revendications 5, 7, 8, 11 et 13, dans lequel les éléments concaténés comprennent en outre un jeton d'horodatage.

**15.** Procédé selon l'une quelconque des revendications 5, 7, 11 et 13, dans lequel ladite partie du message à signer (m) est obtenue par le dispositif de signature électronique du signataire anonyme ($E_s$) par hachage cryptographique de ce message à signer, et transmise au serveur (S) pour la composition du jeton à signer (J).

**16.** Procédé selon l'une quelconque des revendications précédentes, dans lequel les données de levée d'anonymat (DLA) sont mémorisées en relation avec une référence obtenue par hachage cryptographique d'au moins le message à signer (m).

**17.** Procédé selon l'une quelconque des revendications précédentes, dans lequel la trace d'identité du signataire anonyme ($E_s$) est obtenue par hachage cryptographique d'une concaténation des données de levée d'anonymat (DLA) et d'une partie au moins du message à signer (m).

**18.** Procédé selon l'une quelconque des revendications précédentes, dans lequel la trace d'identité du signataire anonyme ($E_s$) est distincte des valeurs des r-1 paramètres de variabilité ($x_i$, $i \neq s$) associés aux autres signataires possibles du groupe (E).

**19.** Procédé selon l'une quelconque des revendications précédentes, dans lequel la trace d'identité du signataire anonyme ($E_s$) comprend au moins une valeur ($X_j$) sélectionnée parmi les r-1 paramètres de variabilité ($x_i$, $i \neq s$) associés aux autres signataires possibles du groupe (E), et dans lequel les données de levée d'anonymat (DLA) incluent un repérage (j) de la valeur sélectionnée.

**20.** Procédé selon l'une quelconque des revendications précédentes, dans lequel le dispositif de signature électronique du signataire anonyme reçoit une trace d'identité ($q_t$) d'au moins un co-signataire ($E_t$) distinct du signataire anonyme ($E_s$) et appartenant au groupe de signataires possibles ($E$), ladite trace d'identité étant générée à l'aide de données complémentaires de levée d'anonymat ($DLA_t$) respectivement mémorisées et tenues secrètes pour ledit co-signataire, et dans lequel le dispositif de signature électronique du signataire anonyme utilise ladite trace d'identité du co-signataire en tant que valeur du paramètre de variabilité ($x_t$) associé à ce co-signataire.

**21.** Procédé selon la revendication 20, dans lequel chaque co-signataire ($E_t$) sollicite un serveur ($S$) supervisé par un tiers pour la production des données complémentaires de levée d'anonymat ($DLA_t$), la trace d'identité ($q_t$) de chaque co-signataire étant reçue par le dispositif de signature électronique du signataire anonyme ($E_s$) depuis ledit serveur.

**22.** Dispositif informatique de signature électronique de messages ($m$) par un signataire anonyme ($E_s$), comprenant des moyens adaptés à la mise en oeuvre des étapes d'un procédé selon l'une quelconque des revendications précédentes, qui incombent à un tel dispositif de signature électronique.

**23.** Programme d'ordinateur à installer dans un dispositif informatique de signature électronique de messages ($m$) par un signataire anonyme ($E_s$), comprenant des instructions pour mettre en oeuvre les étapes d'un procédé selon l'une quelconque des revendications 1 à 21, qui incombent à un tel dispositif de signature électronique, lors d'une exécution du programme par des moyens de traitement dudit dispositif de signature.

**24.** Serveur de confiance ($S$) pour intervenir dans la production de données de levée d'anonymat ($DLA$) relativement à au moins un signataire anonyme ($E_s$), comprenant des moyens de mise en oeuvre des étapes d'un procédé selon l'une quelconque des revendications 7 à 10, 13 à 15 et 21, qui incombent à un tel serveur.

**25.** Programme d'ordinateur à installer dans un serveur de confiance ($S$) intervenant dans la production de données de levée d'anonymat ($DLA$) relativement à au moins un signataire anonyme ($E_s$), comprenant des instructions pour mettre en oeuvre les étapes d'un procédé selon l'une quelconque des revendications 7 à 10, 13 à 15 et 21, qui incombent à un tel serveur, lors d'une exécution du programme par des moyens de traitement dudit serveur.

**26.** Procédé de levée de l'anonymat du signataire anonyme ($E_s$) d'un message ($m$) signé électroniquement conformément à un procédé selon l'une quelconque des revendications 1 à 21, comprenant les étapes suivantes:

- vérifier la signature électronique du message, en extrayant de la signature électronique du message les clés publiques respectives ($PUB_i$) des r signataires possibles du groupe, les valeurs des paramètres de variabilité ($x_i$) respectivement associés aux r signataires possibles du groupe et chaque valeur de paramètre supplémentaire ($v$), en obtenant r valeurs chiffrées ($y_i$) par chiffrage des valeurs des paramètres de variabilité associés aux r signataires possibles du groupe à l'aide de leurs clés publiques respectives, et en s'assurant que le message, les r valeurs chiffrées et chaque valeur supplémentaire vérifient ensemble l'équation d'anneau;
- récupérer les données de levée d'anonymat ($DLA$) mémorisées par l'entité de levée d'anonymat ($E_s$; $S$) en relation avec l'identification ($ID_s$) du signataire anonyme;
- recalculer la trace d'identité du signataire anonyme en fonction des données de levée d'anonymat récupérées; et
- vérifier que la trace d'identité recalculée correspond à la trace d'identité incluse dans les r valeurs de paramètres de variabilité faisant partie de la signature électronique du message.

**27.** Dispositif informatique ($V$) pour lever l'anonymat d'au moins un signataire anonyme ($E_s$) d'un message ($m$) signé électroniquement, comprenant des moyens adaptés à la mise en oeuvre des étapes d'un procédé de levée d'anonymat selon la revendication 26.

**28.** Programme d'ordinateur à installer dans un dispositif informatique ($V$) pour lever l'anonymat d'au moins un signataire anonyme ($E_s$) d'un message ($m$) signé électroniquement, comprenant des instructions pour mettre en oeuvre les étapes d'un procédé de levée d'anonymat selon la revendication 26 lors d'une exécution du programme par des moyens de traitement dudit dispositif.

FIG. 1

FIG. 2

**FIG. 3**

REQUÊTE JETON — 20

S

200 — AUTHENTIF. DE $E_s$

201 (OK) — TIRAGE ALÉA $\mu$

210 — $J \leftarrow \mu \| m \| ID_s \| ext$

211 — SIGNATURE DE J

212 — STOCKAGE DLA=p

$q \leftarrow h(p)$

213

214 — LECTURE DLA

$v \leftarrow q$ — 21

TIRAGE $x_i, i \neq s$ — 4

5 — RING-SIGNATURE DE m AVEC v

MESSAGE SIGNÉ — M

m, v

$PUB_1, ..., PUB_r$

$x_1, ..., x_r$

V

REQUÊTE DLA — OUI — RING-SIGNATURE OK? — 100 — NON

SIGNATURE INVALIDE

$p^*$

OUI — $v = h(p^*)$ ? — NON — 101

OUI — PREUVE p OK? — NON — 110

ANONYMAT LEVÉ : $E_s$

ANONYMAT MAINTENU

**FIG. 4**

SIGNATURE DE m —— 30

$m^*$

REQUÊTE JETON —— 31

$m^*$

S

220

VÉRIFICATION SIGNATURE $m^*$

201        (OK)

TIRAGE ALÉA $\mu$

221

$J \leftarrow \mu \| m^* \| ID_S \| ext$

211

SIGNATURE DE J

212        p

STOCKAGE DLA=p

$q \leftarrow h(p)$

213        q

LECTURE DLA

214

$v \leftarrow q$ —— 21

TIRAGE $x_i, i \neq s$ —— 4

RING-SIGNATURE DE m AVEC v

5

M

MESSAGE SIGNÉ
m, v
$PUB_1, \dots, PUB_r$
$x_1, \dots, x_r$

V

REQUÊTE DLA    OUI    RING-SIGNATURE OK? —— 100    NON

SIGNATURE INVALIDE

$p^*$

OUI    $v = h(p^*)$ ?    NON

101

OUI    PREUVE p OK?    NON

ANONYMAT LEVÉ : $E_s$    110

ANONYMAT MAINTENU

16

FIG. 5

TIRAGE ALÉA $\mu$

$J \leftarrow \mu \| m \| ext$

SIGNATURE DE J
p

STOCKAGE
DLA=p

$v \leftarrow h(p)$

TIRAGE DES $x_i, i \neq s$

RING-SIGNATURE
DE m AVEC v

MESSAGE SIGNÉ
m, v
$PUB_1, ... , PUB_r$
$x_1, ... , x_r$

M

V

RING-SIGNATURE OK?

100

REQUÊTE DLA   OUI         NON

LECTURE DLA

SIGNATURE
INVALIDE

$p^*$

OUI    $v = h(p^*)$ ?    NON

101

OUI    PREUVE
p OK?    NON

110

ANONYMAT
LEVÉ : $E_s$

ANONYMAT
MAINTENU

FIG. 6

FIG. 7

FIG. 8

EP 1 480 375 A1

**EP 1 480 375 A1**

**Office européen des brevets**

**RAPPORT DE RECHERCHE EUROPEENNE**

Numéro de la demande

EP 04 29 1052

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | RIVEST R L; SHAMIR A; TAUMAN Y: "How to leak a secret" [Online] 4 juin 2001 (2001-06-04), , XP002270009 Extrait de l'Internet: URL:http://theory.lcs.mit.edu/~rivest/Rive stShamirTauman-HowToLeakASecret.pdf> [extrait le 2004-02-11] * abrégé * * page 1, ligne 1 - page 8, dernière ligne * * page 11, ligne 29 - page 12, ligne 5 * * figures 1-3 * ----- | 1-3,18, 19,22, 23,26-28 | H04L9/32 |
| D,A | BRESSON E, STERN J, SZYDLO M: "Threshold Ring Signatures and Applications to Ad-hoc Groups" ADVANCES IN CRYPTOLOGY - CRYPTO 2002. 22ND ANNUAL INTERNATIONAL CRYPTOLOGY CONFERENCE (SANTA BARBARA, USA). PROCEEDINGS, 18 août 2002 (2002-08-18), - 22 août 2002 (2002-08-22) pages 465-480, XP002270008 Berlin * page 475, ligne 36 - page 478, dernière ligne ; figures 1-3 * ----- | 20,21 | |

**DOMAINES TECHNIQUES RECHERCHES (Int.Cl.7)**

H04L

Le présent rapport a été établi pour toutes les revendications

| Lieu de la recherche | Date d'achèvement de la recherche | Examinateur |
|---|---|---|
| La Haye | 30 juin 2004 | Dujardin, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

21